# EUROPEAN PATENT APPLICATION

(11) **EP 4 586 161 A1**
(43) Date of publication of application: **16.07.2025**
(21) Application number: 24151747.3
(22) Date of filing: 14.01.2024
(51) Int. Cl.: G06Q 10/06, G06Q 10/0631, G06Q 10/0635, G06Q 10/0637, G06Q 10/067

(54) **ESG VALUENET INTEGRATION MODEL (ESG-VIN MODEL)**

(71) Applicant: Moog, Ralph, 54292 Trier (DE)
(72) Inventor: Moog, Ralph, 54292 Trier (DE)

(57) **Abstract**

The "ESG ValueNet Integration Model (ESG-VIN Model)" represents an advancement in enterprise software for supply chain management, particularly integrating Environmental, Social, and Governance (ESG) considerations. This invention introduces a tiered approach to ESG transparency within supply chains, enhancing efficiency and strategic focus. The model implements a selective focus on value-creation 'points of interest' rather than exhaustive mapping, targeting critical nodes for value addition or risk mitigation (Claim 1, Figures 1-4). It employs a non-SQL polymorphic schema database, accommodating diverse data types and enabling robust, scalable ESG data integration (Claim 1). The integration of structured and unstructured data forms a neuronal-like supply network, providing real-time insights and fostering a comprehensive ESG strategy across an organization (Claims 1, 5). This model is ideally suited for AI applications, optimizing predictive analytics and risk modeling for sustainable supply chain operations (Claim 1).

## Description

### Technical Field

The present invention pertains to the field of Enterprise Software Solutions, particularly those designed for Environmental, Social, and Governance (ESG) integration within supply chain management. This invention introduces a novel approach to ESG management by embedding ESG considerations into the operational framework of supply chains through the ESG ValueNet Integration Model (ESG-VIN Model).

### Background Art

The ESG ValueNet Integration Model (ESG-VIN Model) offers a significant advancement in the field of enterprise software solutions, particularly in addressing Environmental, Social, and Governance (ESG) management within supply chains. Prior art in this domain often grapples with the literal interpretations of 'supply chain,' striving to identify every actor and action within a product's supply chain. This approach has led to several challenges:
Complexity Overload: Real-world supply chains are intricate, with products typically passing through numerous entities-such as raw material suppliers, manufacturers, distributors, and retailers-before reaching the consumer. The attempt to map each link results in a data deluge that is difficult to track and manage.

Dynamic and Non-linear Supply Networks: Supply chains are seldom linear and are more accurately depicted as supply networks with multiple intersecting nodes and links. This dynamism adds to the complexity, as supply chains can change frequently and unpredictably.

Given these issues, there is a pressing need for a solution that offers a more strategic approach to ESG management-one that allows for nuanced transparency levels and focused value-creation within the supply chain. The background art provides the foundation for the ESG-VIN Model, which aims to streamline the integration of structured and unstructured data, employ advanced data analysis, and leverage AI to distill complex supply networks into actionable insights. This model represents a paradigm shift from exhaustive supply chain tracing to a more efficient 'supply line' methodology, targeting critical nodes for value addition or risk mitigation. The ESG-VIN Model's multi-tiered transparency and the neuronal supply network formation are innovations designed to overcome the limitations of prior art solutions, thus redefining strategic ESG integration in modern supply chain management.

### Technical Problem

The ESG ValueNet Integration Model (ESG-VIN Model) addresses a dual-faceted technical problem that has historically plagued ESG enterprise software solutions in the realm of supply chain management.

### Problem 1: Supply Chain Opacity

The first aspect of the technical problem is the inherent opacity of supply chains. The traditional ESG enterprise software solutions have attempted to map entire supply chains in a literal sense, which has resulted in:
- **Complexity Overload:** With products passing through multiple hands, the attempt to map each link creates an overwhelming amount of data.
- **Dynamic and Non-linear Supply Networks:** Supply chains often change unpredictably, making it difficult to maintain an up-to-date and accurate map.
- **Data Volume and Quality:** The vast datasets generated are difficult to manage and often suffer from issues of verification, inconsistency, and poor quality.
- **Scalability Issues:** As businesses grow, the complexity of their supply chains also increases, making existing solutions less effective or obsolete.
- **Cost Inefficiency:** The resources required for exhaustive mapping can be prohibitively expensive and may not align with value creation or risk reduction.

### Problem 2: Organizational Silos

The second aspect concerns organizational silos, which present significant challenges:
- **Disconnected Departments:** Different aspects of the supply chain managed by separate departments can lead to inefficiencies and a lack of coherent ESG strategy.
- **Lack of Integration:** Without end-to-end business processes, data inconsistencies increase operating costs and complicate compliance with ESG reporting regulations.

The ESG-VIN Model aims to resolve these problems by introducing a tiered approach to supply chain transparency and focusing on critical 'points of interest' rather than striving for exhaustive mapping. This targeted method emphasizes value creation and risk significance, leading to more efficient resource allocation and a coherent strategy that aligns with both business objectives and ESG commitments.

### Solution to Problem

The ESG ValueNet Integration Model (ESG-VIN Model) provides an innovative solution to the identified problems of supply chain opacity and organizational silos. Here is how the model addresses these issues:
**Tiered Transparency Approach:** The ESG-VIN Model employs a tiered approach to transparency, which is revolutionary in handling the complexity and dynamic nature of supply chains.
- **Level 1 -** Standard: offers basic transparency, capturing essential data up to the first-tier supplier without batch-specific traceability.
- **Level 2** - **Supply Network:** extends transparency to n-tier suppliers, allowing for expanded oversight. Any activity within the supply network that is of relevance in combination with facility defines a Point-of-Interest.
- **Level 3** - **Digital Twin:** achieves complete traceability, uncovering the full genealogy of products for high-stakes applications. The result represents a digital twin of the finished product or service.

This gradational detailing allows for the optimization of resources, ensuring cost-efficient scalability and targeted oversight.

**Selective Focus on Value-Creation:** The ESG-VIN Model introduces a paradigm shift in supply chain oversight by emphasizing a 'Selective Focus on Value-Creation' rather than a complete mapping of the supply chain. This innovative approach is the hallmark of the model's uniqueness, as it diverges from the exhaustive and often inefficient attempts to monitor each link in the supply chain. Instead, the model strategically identifies and monitors only those links-designated as 'points of interest'-that host significant value-adding activities or potential risks.

This selective monitoring ensures that resources are invested in areas that yield the highest ESG impact or require critical management attention, thereby optimizing the effectiveness of ESG initiatives. By concentrating on these pivotal points, the ESG-VIN Model delivers a targeted and resource-efficient approach to supply chain management, ensuring that the most crucial aspects are accentuated and addressed:
- **Targeted ESG Efforts:** By narrowing the focus to key activities, the model allows for deeper and more meaningful integration of ESG principles where they matter most.
- **Reduced Complexity and Overhead:** This approach eliminates the need for blanket coverage of all supply chain links, many of which may have negligible impact on the overall ESG performance, thereby reducing complexity and associated costs.
- **Dynamic Adaptation:** The 'points of interest' are not static; they can be dynamically selected and adjusted in response to evolving supply chain configurations, market conditions, and regulatory landscapes.
- **Enhanced ESG Performance:** By focusing on areas of high impact, the ESG-VIN Model ensures that a company's ESG performance is not only improved but also visibly demonstrated in the most critical areas of operation.

The 'Selective Focus on Value-Creation' is thus a central feature of the ESG-VIN Model, setting it apart from existing solutions and reinforcing its position as an innovative and efficient tool for ESG integration in supply chain management.

**Structured and Unstructured Data Integration:** Utilizing a non-SQL database with a polymorphic schema, the ESG-VIN Model integrates both structured and unstructured data, accommodating the diverse nature of supply chain information.

**Neuronal Supply Network Formation:** The model forms a unified neuronal supply network, acting as a singular source of truth that streamlines data management and provides actionable insights for stakeholders.

**Multi-Dimensional Vector Matrix Application:** The ESG-VIN Model, conceptualized as a multi-dimensional vector matrix, is ideally suited for the application of Al. This structure:
- Facilitates enhanced data analysis and AI integration, allowing for predictive analytics, risk modeling, and optimization scenarios.
- Provides a comprehensive framework that can process vast quantities of polymorphic data, which traditional databases may struggle with.

**Cross-Integration of Processes:** The model achieves a synthesis of cross-functional data integration and process alignment, ensuring ESG considerations are woven into every department and business process, promoting collaborative, informed decision-making.

A potential application of the ESG ValueNet Integration Model can be envisioned in the context of a major retail organization aiming to embed Environmental, Social, and Governance (ESG) values into its supply chain operations. The model's implementation could begin with establishing foundational ESG integration within first-tier suppliers, known as Level 1 Transparency. This initial phase lays the groundwork for extending oversight progressively to n-tier suppliers, thus achieving Level 2 Transparency. By adopting a polymorphic schema within a non-SQL database, the model could handle diverse data types, enabling robust and scalable ESG data integration. The ultimate goal would be to create a comprehensive 'Digital Twin' of the supply chain, embodying Level 3 Transparency, for complete end-to-end traceability and dynamic ESG management. Such an implementation would seamlessly integrate with the organization's existing systems, offering real-time insights and enhancing the coherence of ESG management across the entire supply network.

### Description of Drawings

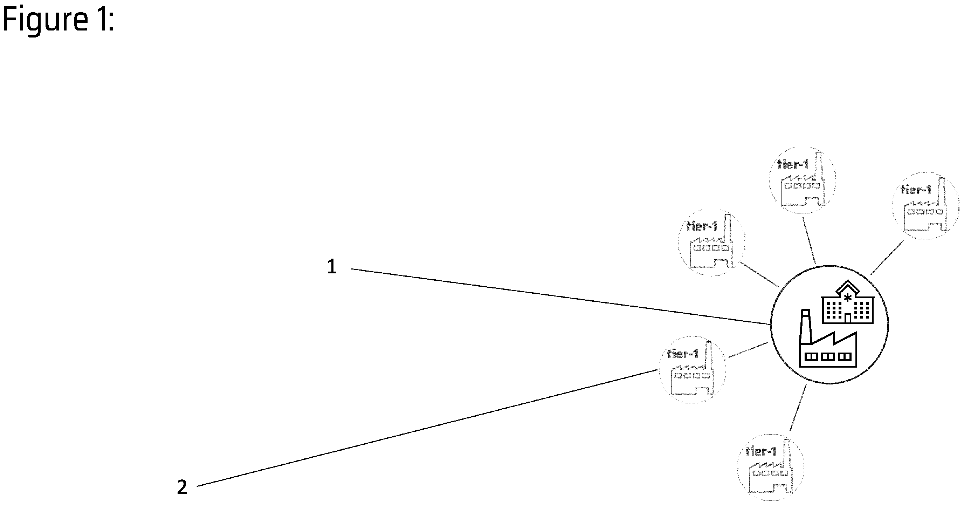

### Figure 1: Level 1 - Standard: 1st tier transparency

The drawing titled "Figure 1: Level 1 - Standard: 1st tier transparency" illustrates the current standard practice in supply chain management, particularly as it pertains to the transparency of Environmental, Social, and Governance (ESG) factors.

Here is a description based on the context provided and the detailed information from the patent application document:
1. **Facility of the Solution Owner:** This central node represents the company or organization that owns the solution, which is the focal point of the first-tier transparency. It's where the operational framework is managed and where ESG considerations are integrated.
2. **Tier 1 (Direct) Supplier:** These are the first-tier suppliers, directly connected to the solution owner's facility. They are the immediate suppliers that the company has direct relationships with and for which some basic ESG data may be available. These suppliers are the most visible to the solution owner.

The remarks indicate that at this level of supply chain transparency:
- The solution owner is aware of all their first-level suppliers.
- There is internal batch traceability within the solution owner's facility, but there is no end-to-end batch traceability that extends into the broader supply chain.
- There is no direct relationship with nth-tier suppliers, meaning the transparency does not extend beyond the first tier of suppliers. This limitation reflects the current state of most companies' supply chain management practices.

This diagram and the accompanying remarks underscore the limitations of current ESG management practices within supply chains. The patent application's ESG ValueNet Integration Model aims to address these limitations by introducing a more nuanced, tiered approach to transparency, which includes not just the first-tier suppliers but also extends to n-tier suppliers and integrates a digital twin for complete traceability. This approach is part of a broader strategy to improve the management and integration of ESG factors into supply chain operations.

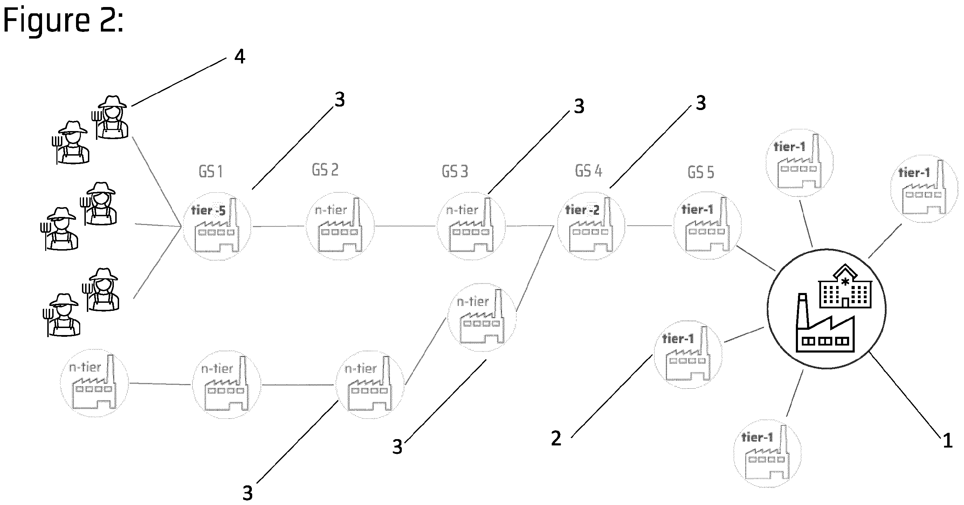

### Figure 2: Level 2 - Supply Network: n-tier transparency

"Figure 2: Level 2 - Supply Network: n-tier transparency" illustrates a more advanced level of supply chain transparency as per the ESG ValueNet Integration Model (ESG-VIN Model) from the patent application. This figure reflects the transition from basic first-tier supplier transparency to a broader understanding of the n-tier suppliers within the supply network, as well as the initial steps toward active supply chain management to ensure compliance with regulations like the German Supply Chain Due Diligence Act.

Here is a description based on the context provided by the patent application and the detailed remarks:
1. **Facility of the Solution Owner:** This is the central hub of the solution owner's supply chain, managing and integrating ESG considerations across operations.
2. **Tier 1 (Direct) Supplier:** These suppliers have a direct business relationship with the solution owner and are the primary focus of traditional supply chain transparency practices.
3. **N-tier Supplier in Supply Network:** These are suppliers beyond the first tier, which may include second-tier, third-tier, and beyond. At Level 2, there is a recognition of the need to identify and manage these suppliers, especially where risks related to human rights violations could potentially occur within the supply chain.
4. **Small Owner Farmer as Primary Producer:** Depicted as individuals outside the direct supply chain, these primary producers are critical in the context of ESG transparency, particularly for industries relying on agricultural raw materials.

The description provided by the remarks indicates that Level 2 transparency involves:
- A static design of the supply chain, with an initial rough sketch to outline the relevant genealogy steps as far as known by the solution owner.
- Critical scrutiny of potential human rights violations within the genealogy steps to ensure compliance with ESG-related regulations.
- The introduction of preventative measures, such as self-disclosure forms or certification requests
(e.g., Fairtrade certificates), from suppliers to actively manage and exchange information.
- The management of nth-tier suppliers based on a "need-to-know" basis, which requires establishing direct relationships and obtaining information from them.
- The absence of real-time traceability and batch management; however, internal batch traceability within the solution owner's operations is present.

Level 2 transparency, as depicted in "Figure 2," indicates a shift from merely knowing the first-tier suppliers to identifying and managing nth-tier suppliers, at least to some extent. This is in response to compliance requirements, like the German Supply Chain Due Diligence Act, that mandate companies to have a deeper understanding of their supply chain, particularly concerning human rights and environmental risks.

The Extended Supply Chain Planning System mentioned in the remarks could be a tool within the ESG-VIN framework that enables the establishment of Level 2 transparency. However, it is noted that even with such a system, real-time traceability and batch management across the entire supply chain are not yet achievable at this level.

Thus, Figure 2 represents an intermediate step towards full supply chain transparency and ESG integration, where the focus has broadened beyond the immediate suppliers to include a larger network, with an aim to manage and mitigate risks more effectively and ensure compliance with emerging ESG regulations.

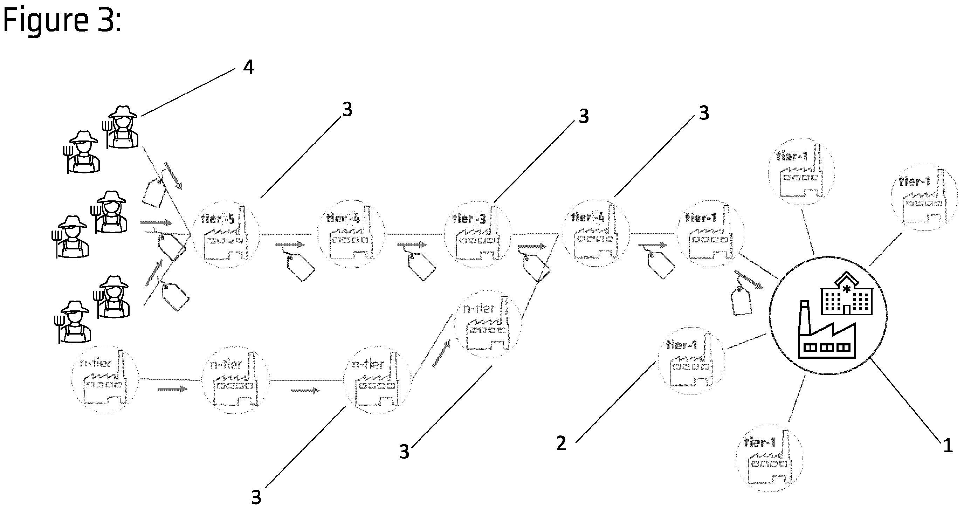

### Figure 3: Level 3 - Digital Twin: n-tier-managed and integrated transparency

Figure 3: Level 3 - Digital Twin: n-tier-managed and integrated transparency, represents the most advanced level of supply chain transparency in the ESG ValueNet Integration Model (ESG-VIN Model) as described in the patent application document. Here is a contextual description based on the remarks provided:
1. **Facility of the Solution Owner:** This represents the central node of the organization that owns the supply chain solution, which at this level of transparency, is fully integrated with end-to-end traceability and supply chain management capabilities.
2. **Tier 1 (Direct) Supplier:** These are the direct suppliers that have a business relationship with the solution owner and whose operations are now closely integrated and managed for ESG compliance.
3. **N-tier Supplier in Supply Network:** Beyond the first tier, these suppliers form the extended network that is actively managed in real-time. They are fully known and integrated into the supply chain, allowing for robust oversight and management of ESG factors.
4. **Small Owner Farmer as Primary Producer:** Representing the most upstream actors in the supply chain, these primary producers are now actively integrated into the digital twin model, which allows for real-time traceability and management of the supply chain from the very start.

In Level 3 transparency:
- Nth-tier suppliers are fully known, and the supply chain is completely managed and instantiated.
- There is a full integration of the external supply chain with internal batch traceability, achieving end-to-end real-time batch traceability.
- Relevant genealogy steps within the supply chain are actively managed, allowing for real-time adaptations and improvements in operational processes, product safety, and quality.
- Hybrid models between Level 2 and Level 3 transparency are common, indicating a gradual adoption of full end-to-end transparency.

This level of transparency enables companies to go beyond compliance with legal requirements, like the German Supply Chain Due Diligence Act, and transform their operations by enhancing collaboration among all supply chain actors. It marks a significant move towards a more interconnected and transparent supply chain model, fostering a strategic transformation that is underpinned by real-time data and sophisticated supply chain management practices.

In summary, while many companies today have achieved Level 1 transparency, and with the evolving legal landscape, Level 2 transparency is becoming a mandatory requirement, Level 3 transparency represents a future-facing goal. It signifies the peak of supply chain transparency, where companies can leverage real-time data to not only ensure compliance but to drive operational excellence and strategic ESG integration across the entire value chain.

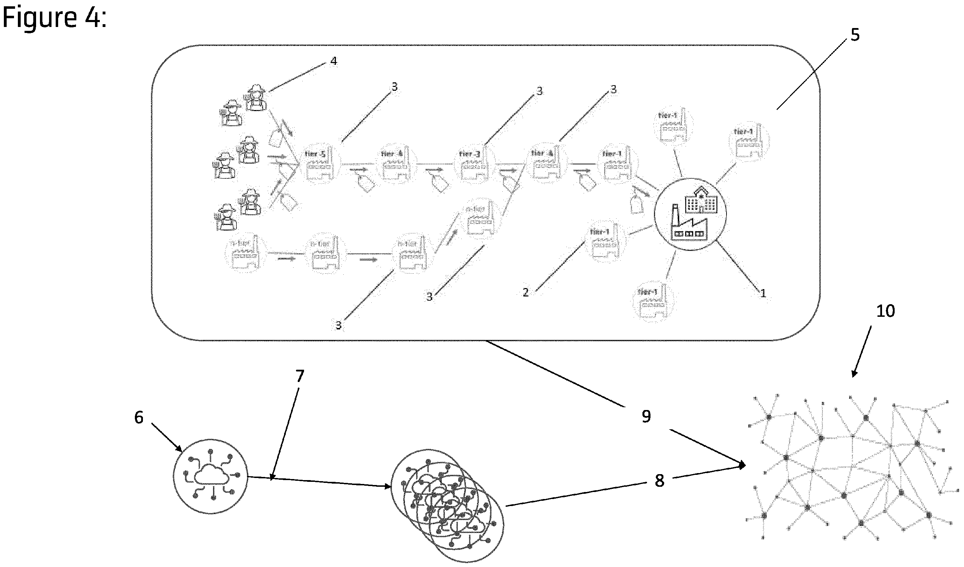

### Figure 4: Merge of Level 1 to 3 into the Neural Supply Network

"Figure 4: Merge of Level 1 to 3 into the Neural Supply Network" encapsulates the synthesis of different levels of supply chain transparency into an integrated, real-time, and responsive supply network as described in the ESG ValueNet Integration Model (ESG-VIN Model) within the patent application. Here is the contextual description based on the remarks provided:
1. **Facility of the Solution Owner:** The central hub from which the solution owner manages and monitors the supply chain, integrating ESG considerations into operational frameworks and decision-making processes.
2. **Tier 1 (Direct) Supplier:** Direct suppliers to the solution owner, whose operations and ESG compliance are closely monitored and managed.
3. **N-tier Supplier in Supply Network:** The broader network of suppliers, including second-tier, third-tier, and beyond, whose ESG-related data and activities are now integrated into the solution owner's operational oversight.
4. **Small Owner Farmer as Primary Producer:** The grassroots level of the supply chain, which includes primary producers such as small owner farmers. Their activities are fully integrated into the supply chain management, ensuring traceability and ESG compliance from the ground up.
5. **Integrated Supply Chains Level 1-3:** The amalgamation of supply chain transparency levels, where basic first-tier supplier transparency (Level 1), expanded oversight to n-tier suppliers (Level 2), and complete digital twin traceability (Level 3) are merged into a cohesive and holistic management approach.
6. **Supply Network Node (POI):** Points of interest within the supply network where specific supply network activities, events, requirements, or risks are identified and managed. These nodes represent critical junctions for ESG data collection and action.
7. **Linked to Business Partner with Location (or Cluster):** These POIs are linked to specific business partners and their locations, enabling the solution owner to pinpoint where actions or improvements need to be made within the supply network.
8. **Supply Network Nodes Merge into Neuronal Supply Network:** The convergence of supply network nodes into a complex, interconnected network that resembles neural pathways in its functionality and structure.
9. **Integrated Supply Chains Merge into Neuronal Supplier Network:** The process where the previously separated supply chains, from level 1 to 3, coalesce into a single, dynamic, and interconnected supplier network.
10. **Neural Supply Network:** The most sophisticated manifestation of the ESG-VIN Model where all supply chain data, from the facility of the solution owner to the small owner farmers, is integrated into a real-time, neuron-like structure. This neural network is capable of adaptive learning and real-time analysis, allowing for predictive analytics, risk modeling, and optimization scenarios to enhance sustainability efforts and operational agility.

This drawing and the accompanying remarks highlight the ESG-VIN Model's ultimate goal: to create a living, breathing supply network that mirrors the complexity and adaptability of natural systems. It goes beyond static mappings and allows for dynamic adaptation to changing conditions, market demands, and regulatory requirements. By leveraging AI and advanced data analytics, this model provides a comprehensive framework that can process vast quantities of data, enabling companies to not only comply with ESG standards but to excel in them.

In essence, "Figure 4" demonstrates the merger of various transparency levels into a centralized, intelligent network, which is a strategic departure from traditional, linear supply chain models. This neural supply network forms the bedrock of a transformative strategy for companies, positioning them to be at the forefront of ESG integration and sustainable supply chain management.

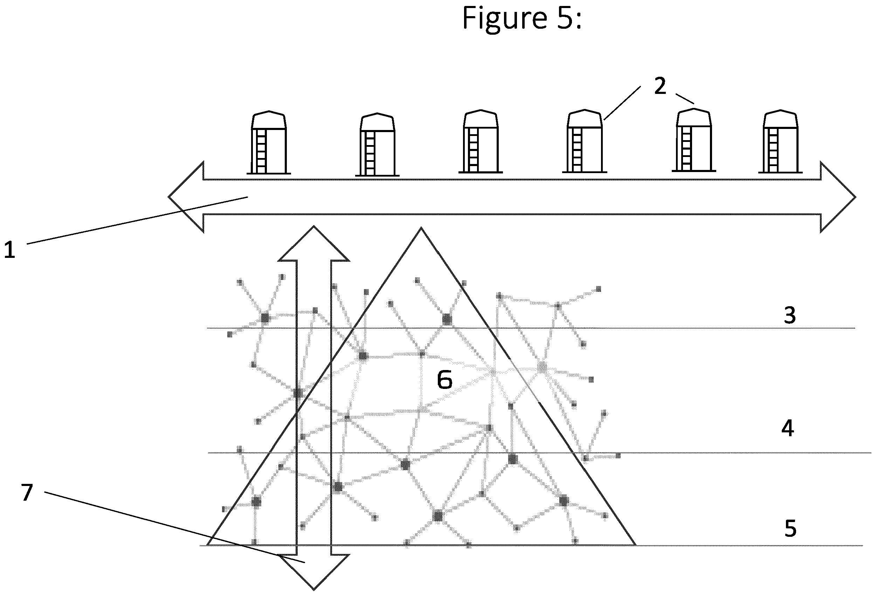

### Figure 5: ESG ValueNet Cross-integration Model (ESG-VIN Model)

1. **Business Process Integration:** This arrow likely represents the integration of ESG considerations into the entire business process. It points to the need for a holistic approach that embeds ESG factors into the core operational framework of supply chains.
2. **Departmental Silos Along a Business Process:** The numbered buildings may symbolize departmental silos within an organization, which the ESG-VIN Model aims to connect and integrate. These silos represent separate departments that traditionally manage different aspects of the supply chain, often leading to inefficiencies and a fragmented ESG strategy.
3. **Level 1 Transparency:** This level offers basic transparency capturing essential data up to the first-tier supplier without batch-specific traceability. It is the foundational layer of transparency that covers compliance and basic ESG data management.
4. **Level 2 Transparency** - **Supply Network:** This extends transparency to n-tier suppliers and includes activities within the supply network that are of relevance in combination with a facility, defining Points-of-interest for ESG management.
5. **Level 3 Transparency** - **Digital Twin:** This represents the pinnacle of transparency where the model achieves complete traceability, uncovering the full genealogy of products. It represents a digital twin of the finished product or service, allowing for detailed ESG data management.
6. **Neural Supply Network:** The interconnected network illustrates the ESG-VIN Model's approach to forming a unified, neuronal-like supply network. This network acts as a single source of truth, streamlining data management, and providing actionable insights for stakeholders. It represents a dynamic, non-linear supply network that can adapt to changes in the supply chain.
7. **Transparency Level Integration:** The arrows pointing inwards from the Business Process Integration and Departmental Silos towards the neural network likely denote the integration of different transparency levels into a cohesive model. This integration enables the creation of a comprehensive and interconnected view of the supply chain, fostering collaborative and informed decision-making across the organization.

The overall design and interconnections highlighted in the diagram encapsulate the novel approach of the ESG-VIN Model, which is characterized by a tiered transparency approach, a selective focus on value-creation, integration of structured and unstructured data, formation of a neuronal supply network, and cross-functional process integration to overcome traditional challenges such as complexity overload, dynamic and non-linear supply networks, and organizational silos. The model shifts the paradigm from exhaustive supply chain tracing to a more efficient methodology, targeting critical nodes for value addition or risk mitigation, ensuring cost-efficient scalability, and optimized oversight. The ESG-VIN Model is a multi-dimensional vector matrix ideally suited for the application of Al, which facilitates enhanced data analysis and predictive analytics for more sustainable and profitable supply chain operations.

## Claims

1. A system for supply chain management integrating Environmental, Social, and Governance (ESG) considerations, **characterized in that** it comprises:
• a tiered transparency approach with multiple levels of supply chain data visibility,
• selective focus on strategic 'points of interest' within the supply chain for targeted value creation and risk assessment,
• a polymorphic schema within a non-SQL database management system for diverse data integration,
• a neuronal supply network forming a central repository for all ESG-related supply chain data,
• a multi-dimensional vector matrix for advanced data analysis and application of artificial intelligence (Al),
• cross-functional process integration for dismantling operational silos and fostering collaborative ESG strategy development across an organization.

2. The system of claim 1, wherein the tiered transparency approach is **characterized by**:
• a Level 1 offering basic transparency for compliance,
• a Level 2 extending oversight to n-tier suppliers while excluding batch-specific details, (supply network concept)
• a Level 3 providing complete batch and lot traceability for detailed ESG data management. (digital twin)

3. The system of claim 1, wherein the selective focus on value-creation is **characterized by**:
• identifying and managing key activities within the supply chain that directly contribute to product value or pose significant risks,
• dynamic identification and management of supply network participants,
• focusing on activities with a high impact on product quality, safety, and compliance with ESG standards.

4. The system of claim 1, wherein the neuronal supply network is **characterized by** the integration of structured and unstructured data across all levels of supply chain transparency, thereby serving as a unified source of truth for diverse stakeholders.

5. The system of claim 1, wherein the multi-dimensional vector matrix application is **characterized by**:
• enabling predictive analytics to forecast future supply chain disruptions,
• facilitating risk modeling considering multiple ESG factors and their interdependencies,
• allowing optimization scenarios to enhance sustainability efforts while maintaining profitability.

6. The system of claim 1, wherein the cross-functional process integration is **characterized by**:
• real-time visibility and shared accountability among different organizational departments,
• a unified approach to ESG management that promotes agile and responsive decision-making,
• enhancing stakeholder engagement and brand reputation through transparent and active management of ESG factors.
